# EUROPÄISCHE PATENTANMELDUNG

(11) **EP 4 071 094 A1**
(43) Veröffentlichungstag der Anmeldung: **12.10.2022**
(21) Anmeldenummer: 21166952.8
(22) Anmeldetag: 06.04.2021
(51) Int. Cl.: B65G 67/20, B60P 1/64

(54) **LADUNGSTRÄGER ZUM BELADEN UND ENTLADEN EINES CONTAINERS**

(71) Anmelder: PHS Logistiktechnik GmbH, 8054 Graz (AT)
(72) Erfinder: Wolfschluckner, Andreas, 8055 Graz (AT); Fritz, Matthias, 8041 Graz (AT)
(74) Vertreter: KLIMENT & HENHAPEL

(57) **Zusammenfassung**

Ladungsträger (1) zum Beladen und Entladen eines Containers (9), umfassend starre Ladungsträgersegmente (6, 6'),
wobei die Ladungsträgersegmente jeweils eine in eine dritte Richtung (12) weisende Oberseite (7, 7') aufweisen und sich mit einer Segmentlänge (13) in einer ersten Richtung (10) erstrecken und mit einer Segmentbreite (14) in einer zweiten Richtung (11),
wobei in einem ersten Zustand des Ladungsträgers die Oberseiten der Ladungsträgersegmente parallel zueinander und in erster Richtung gesehen hintereinander angeordnet sind, um eine ebene Ladefläche (8) auszubilden,
wobei die Ladungsträgersegmente derart gelenkig miteinander verbunden sind, dass die Ladungsträgersegmente um parallel zur zweiten Richtung verlaufende Schwenkachsen (16) gegeneinander verschwenkbar sind,
wobei im ersten Zustand jeweils eines der
Ladungsträgersegmente, das in der ersten Richtung gesehen auf ein jeweils anderes der Ladungsträgersegmente folgt, mit seiner Oberseite in Richtung der Oberseite des anderen Ladungsträgersegments verschwenkbar ist, um den Ladungsträger durch spiralförmiges Aufrollen der Ladungsträgersegmente aus dem ersten Zustand in einen zweiten Zustand und durch Abrollen zurück in den ersten Zustand überführen zu können.

## Beschreibung

### GEBIET DER ERFINDUNG

Die vorliegend Erfindung betrifft einen Ladungsträger zum Beladen und Entladen eines Containers, insbesondere mit bzw. von Stückgut.

### STAND DER TECHNIK

Aus der EP 3061648 B1 ist ein System zum Entladen von Gegenständen aus einem Container bekannt, bei dem die Gegenstände auf einem Gurt, der den Boden des Containers bedeckt, angeordnet sind. An einer Entladebucht kann der Gurt samt den auf ihm angeordneten Gegenständen aus dem Container herausgezogen werden. Nachteilig an dieser Lösung ist eine nicht immer ausreichende Robustheit, insbesondere wenn es sich nicht vermeiden lässt, dass Transportfahrzeuge wie Gabelstapler auf den Gurt fahren und dabei den Gurt potentiell schädigen. Ein weiterer Nachteil ist, dass zur Beladung bzw. Wiederbeladung des Containers spezielle Rückziehmittel im oder am Container vorgesehen werden müssen, um den Gurt mit darauf angeordneten Gegenständen in den Container hinein ziehen zu können, wodurch sich der konstruktive Aufwand und damit auch Kosten erhöhen.

### AUFGABE DER ERFINDUNG

Es ist daher Aufgabe der vorliegenden Erfindung, eine Lösung zum Entladen und Beladen von Containern zur Verfügung zu stellen, die die oben genannten Nachteile vermeidet. Insbesondere soll die erfindungsgemäße Lösung hinreichend mechanisch stabil sein und ohne erhöhten konstruktiven Aufwand neben dem Entladen auch das Beladen ermöglichen.

### DARSTELLUNG DER ERFINDUNG

Zur Lösung der genannten Aufgabe ist erfindungsgemäß ein Ladungsträger zum Beladen und Entladen eines Containers vorgesehen, der Ladungsträger umfassend starre Ladungsträgersegmente, wobei die Ladungsträgersegmente jeweils eine in eine dritte Richtung weisende Oberseite aufweisen und sich mit einer Segmentlänge in einer ersten Richtung erstrecken und mit einer Segmentbreite in einer zweiten Richtung, wobei die erste Richtung, die zweite Richtung und die dritte Richtung wechselseitig normal aufeinander stehen, wobei in einem ersten Zustand des Ladungsträgers die Oberseiten der Ladungsträgersegmente im Wesentlichen parallel zueinander und in erster Richtung gesehen hintereinander angeordnet sind, um eine im Wesentlichen ebene Ladefläche auszubilden, wobei die Ladungsträgersegmente derart gelenkig miteinander verbunden sind, dass die Ladungsträgersegmente um parallel zur zweiten Richtung verlaufende Schwenkachsen gegeneinander verschwenkbar sind, wobei im ersten Zustand jeweils eines der Ladungsträgersegmente, das in der ersten Richtung gesehen auf ein jeweils anderes der Ladungsträgersegmente folgt, mit seiner Oberseite in Richtung der Oberseite des anderen Ladungsträgersegments verschwenkbar ist, um den Ladungsträger durch zumindest abschnittsweises spiralförmiges Aufrollen der Ladungsträgersegmente aus dem ersten Zustand in einen zweiten Zustand überführen zu können, wobei der Ladungsträger aus dem zweiten Zustand durch Abrollen in den ersten Zustand überführbar ist.

Typischerweise erstrecken sich die Ladungsträgersegmente weiters mit einer Segmenthöhe in der dritten Richtung.

Das Beladen und Entladen betrifft insbesondere Stückgut, wobei hiervon sowohl einzelne Pakete bzw. Einzelstücke als auch Sammelgut oder palettierte Gegenstände mitumfasst sind.

Aus der Eignung für das Beladen und Entladen von Containern ergibt sich natürlich u.a. auch eine Eignung für das Beladen und Entladen von Ladeflächen, insbesondere von Fahrzeugen wie z.B. von Lastkraftwagen, oder Laderäumen, insbesondere von Fahrzeugen wie z.B. von Lastkraftwagen. Entsprechend sind hier und im Folgenden solche Ladeflächen und Laderäume stets mitgemeint, wenn von Containern die Rede ist.

Indem die Ladungsträgersegmente - im Gegensatz zu einem Gurt, beispielsweise - starr ausgeführt sind, wird einerseits eine gesteigerte mechanische Stabilität und Robustheit im Vergleich zu aus dem Stand der Technik bekannten Lösungen erzielt. Andererseits erlauben die starren Ladungsträgersegmente nicht nur ein Ziehen des Ladungsträgers, insbesondere um diesen samt darauf angeordnetem Ladungsgut aus einem Container zu ziehen und so den Container zu entladen, sondern auch ein Drücken bzw. Schieben des Ladungsträgers in die entgegengesetzte Richtung, insbesondere um den Ladungsträger samt darauf angeordnetem Ladungsgut in einen Container hinein zu schieben und so den Container zu beladen. Das Beladen kann zudem auch so erfolgen, dass Stückgut auf dem Ladungsträger angeordnet wird, während dieser in den Container hinein geschoben wird.

Im Gegensatz zu aus dem Stand der Technik bekannten Schubböden, die aus einzeln längsverschiebbaren Lamellen bestehen, wird der gesamte Ladungsträger auf einmal beim Entladen des Containers durch entsprechendes Ziehen am Ladungsträger bzw. beim Beladen durch entsprechendes Drücken bzw. Schieben bewegt. Entsprechend erfolgen das Entladen sowie das Beladen mit dem Ladungsträger wesentlich schneller als bei bekannten Schubböden. Zudem kann auch der Übergang auf eine weiterführende Fördertechnik schonender gestaltet werden, da beim Bewegen des Ladungsträgers keine Scherkräfte vom Ladungsträger auf das darauf angeordnete Fördergut wirken, weil die Ladungsträgersegmente nicht, insbesondere nicht in der ersten Richtung, gegeneinander verschoben werden.

Die Oberseiten der Ladungsträgersegmente liegen gegenüber von Unterseiten der Ladungsträgersegmente, wobei die Oberseiten und Unterseiten voneinander weg weisen. Die dritte Richtung wird wie die erste und zweite Richtung durch das jeweilige Ladungsträgersegment definiert und weist von der Unterseite des jeweiligen Ladungsträgersegments zu dessen Oberseite, und in diesem Sinne weist die Oberseite in die dritte Richtung. Das bedeutet aber z.B. nicht, dass die jeweilige Oberseite eine Normalebene auf die dritte Richtung ausbilden muss. Insbesondere müssen die Oberseiten nicht eben ausgebildet sein, sondern können Unebenheiten aufweisen, etwa um einen besseren Halt für das Ladungsgut zu generieren.

Auf den Oberseiten der Ladungsträgersegmente kann im ersten Zustand des Ladungsträgers Ladungsgut angeordnet werden bzw. sein. Typischerweise weisen dabei die Oberseiten - bzw. weist dabei die dritte Richtung - zumindest mit einer Richtungskomponente gegen die Schwerkraftrichtung. In diesem Sinne werden die Ladungsträgersegmente beim Aufrollen typischerweise nacheinander "nach oben" verschwenkt.

Der erste Zustand des Ladungsträgers könnte auch als Betriebszustand bezeichnet werden oder als ein für die Beladung (mit Ladungsgut) vorgesehener Zustand. Dass die Oberseiten der Ladungsträgersegmente im Wesentlichen parallel zueinander (und in erster Richtung gesehen hintereinander) angeordnet sind, ist so zu verstehen, dass hiervon im Wesentlichen alle Ladungsträgersegmente des Ladungsträgers betroffen sind. Geringfügige Abweichungen von besagter Anordnung können sich z.B. aus technisch unvermeidlichen Fertigungsgründen ergeben oder aus der Anordnung des Ladungsträgers in einem konkreten Container mit spezifischen Platzverhältnissen. Insbesondere in letzterem Fall ist es nicht ausgeschlossen, dass z.B. ein letztes und/oder erstes Ladungsträgersegment mit seiner Oberseite nicht ganz parallel zu den anderen Ladungsträgersegmenten liegt.

Hier und im Folgenden ist unter "parallel" stets auch "antiparallel" zu verstehen, sofern nicht explizit anderes angegeben ist.

Typischerweise ist der Ladungsträger so dimensioniert, dass seine Ladefläche sich über die gesamte für die Beladung nutzbare Fläche des Containers / Ladefläche des Fahrzeugs / Bodenfläche des Laderaums des Fahrzeugs erstreckt bzw. diese bedecken kann.

Dass die durch den Ladungsträger im ersten Zustand ausgebildete Ladefläche im Wesentlichen eben ist, ist so zu verstehen, dass sich die Ladefläche in einer Ebene erstreckt, dass aber natürlich geringfügige Abweichungen möglich sind, die z.B. aus Fertigungsgründen technisch unvermeidlich sind oder sich aus der Anordnung des Ladungsträgers in einem konkreten Container mit spezifischen Platzverhältnissen ergeben. Hiervon abgesehen muss die Oberseite der Ladungsträgersegmente, wie oben bereits erläutert, nicht eben ausgeführt sein, weshalb die Oberfläche der Ladefläche nicht eben zu sein braucht.

Der zweite Zustand des Ladungsträgers könnte auch als Speicherzustand bezeichnet werden, der eine extrem platzsparende Unterbringung des Ladungsträgers, insbesondere an einer Entladebucht, ermöglicht, was einen weiteren Vorteil gegenüber bekannten Lösungen, wie z.B. Schubböden, darstellt. In einer Querschnittsebene normal auf die zweite Richtung (bzw. die zweiten Richtungen) ergibt sich im zweiten Zustand zumindest abschnittsweise eine Spiralform oder Schneckenform des Ladungsträgers bzw. zumindest abschnittsweise eine spiralförmige/schneckenförmige Anordnung der aufeinander folgenden Ladungsträgersegmente.

Dabei kann der Ladungsträger in einer entsprechend dafür eingerichteten Speichereinheit, beispielsweise einer Speicherkassette, zumindest abschnittsweise spiralförmig angeordnet werden, um eine geschützte Unterbringung des Ladungsträgers im zweiten Zustand zu ermöglichen. Die Speichereinheit kann entsprechend an der Entladebucht vorgesehen sein bzw. dort angeordnet werden.

Zur platzsparendsten Unterbringung des Ladungsträgers kann es vorgesehen sein, dass dieser im zweiten Zustand vollständig spiralförmig aufgerollt wird, dass also die Abfolge sämtlicher Ladungsträgersegmente eine spiralförmige Anordnung ergibt. Typischerweise sind jedoch im zweiten Zustand nicht sämtliche Ladungsträgersegmente aufgerollt bzw. in einer spiralförmigen Anordnung, sondern wird das Aufrollen gestoppt, sobald der Ladungsträger vollständig aus dem Container herausgezogen ist, wobei in der Regel zumindest einige wenige Ladungsträgersegmente, inklusive des letzten Ladungsträgersegments, weiterhin im Wesentlichen parallel zueinander angeordnet verbleiben.

Beim Überführen des Ladungsträgers aus dem zweiten Zustand in den ersten Zustand durch Abrollen werden die Ladungsträgersegmente klarerweise in die (im Vergleich zum Aufrollen) entgegengesetzte Richtung zurückgeschwenkt.

Bei einer bevorzugten Ausführungsform des erfindungsgemäßen Ladungsträgers ist vorgesehen, dass im ersten Zustand des Ladungsträgers das jeweils eine der Ladungsträgersegmente mit seiner Oberseite in Richtung der Oberseite des jeweils anderen Ladungsträgersegments um einen ersten Schwenkwinkel verschwenkbar ist, der maximal 45°, bevorzugt maximal 30°, beträgt, und dass im ersten Zustand des Ladungsträgers das jeweils eine der Ladungsträgersegmente mit seiner Oberseite von der Oberseite des jeweils anderen Ladungsträgersegments weg um einen zweiten Schwenkwinkel verschwenkbar ist, der maximal 3°, bevorzugt maximal 1°, besonders bevorzugt 0°, beträgt. Diese Beschränkung des Bereichs, in welchem die Ladungsträgersegmente verschwenkbar sind, bewirkt eine besonders hohe Stabilität des Ladungsträgers sowohl beim Abrollen bzw. beim Überführen vom zweiten in den ersten Zustand als auch beim Drücken bzw. Schieben des Ladungsträgers, insbesondere um den Ladungsträger samt darauf angeordnetem Ladungsgut in einen Container hinein zu schieben und so den Container zu beladen.

Grundsätzlich genügt es für das Hin- und Herüberführen zwischen dem ersten und zweiten Zustand, wenn der zweite Schwenkwinkel gleich null ist. Ein zweiter Schwenkwinkel, der etwas größer als 0° ist, kann sich jedoch als günstig erweisen, da hierdurch ein gewisses Spiel ermöglicht wird, wodurch der Ladungsträger etwas flexibler wird und eine Neigung zum Verklemmen beim Hin- und Herüberführen zwischen dem ersten und zweiten Zustand zuverlässig vermieden werden kann.

Die genannte Beschränkung des Schwenkbereichs kann z.B. in an sich bekannter Weise durch entsprechend geformte Schwenkglieder erreicht werden, die zur gelenkigen Verbindung der Ladungsträgersegmente vorgesehen sind, wobei jedes Ladungsträgersegment mehrere, vorzugsweise zwei, Schwenkglieder aufweist, die in zweiter Richtung gesehen hintereinander angeordnet sein können. Entsprechend ist es bei einer bevorzugten Ausführungsform des erfindungsgemäßen Ladungsträgers vorgesehen, dass zur gelenkigen Verbindung der Ladungsträgersegmente die Ladungsträgersegmente jeweils mehrere, vorzugsweise zwei, Schwenkglieder aufweisen, wobei die Schwenkglieder von zwei aufeinander folgenden Ladungsträgersegmenten verschwenkbar ineinander greifen.

Aus Festigkeitsgründen sind die Schwenkglieder vorzugsweise aus Stahl gefertigt, beispielsweise durch Laserschneiden oder Fräsen.

Wie gesagt, kann durch geeignete Formgebung der Schwenkglieder die Beschränkung des Schwenkbereichs einfach verwirklicht werden. Entsprechend ist es bei einer besonders bevorzugten Ausführungsform des erfindungsgemäßen Ladungsträgers vorgesehen, dass die Größe des ersten Schwenkwinkels und die Größe des zweiten Schwenkwinkels durch Formschluss der ineinander greifenden Schwenkglieder aufeinander folgender Ladungsträgersegmente beschränkt sind.

Bei einer bevorzugten Ausführungsform des erfindungsgemäßen Ladungsträgers ist vorgesehen, dass die Ladungsträgersegmente jeweils mindestens eine Deckplatte aufweisen, wobei die Deckplatten Rillenstrukturen aufweisen, die die Oberseiten der Ladungsträgersegmente ausbilden, wobei vorzugsweise die Deckplatten durch Extrusion gefertigt sind.

Zur Ausbildung der Oberseite der Ladungsträgersegmente können mehrere Deckplatten vorgesehen sein, die insbesondere in der zweiten Richtung gesehen hintereinander angeordnet sein können. Entsprechend können unterschiedlich große Oberseiten mit einfach und kostengünstig herzustellenden Deckplatten in wenigen Größen, insbesondere lediglich in einer Einheitsgröße, realisiert werden.

Die Rillenstruktur erweist sich als günstig für den Halt des Ladungsguts auf dem Ladungsträger. Darüberhinaus kann die Rillenstruktur für einen möglichst schonenden Übergang auf weiterführende Fördertechnik ausgenutzt werden, indem ein Übergangsstück zwischengeschaltet wird, das eine korrespondierende Rillenstruktur aufweist, die in die Rillenstruktur der Ladungsträgersegmente eingreift. Hierdurch kann das Übergangsstück das auf den Deckplatten angeordnete Stückgut unterfahren, um ein widerstandsarmes, stufenloses Gleiten des Stückguts auf das Übergangsstück (genauer auf eine der Unterseite gegenüberliegenden Oberseite des Übergangsstücks) und in der Folge auf die weiterführende Fördertechnik zu ermöglichen.

Die Fertigung der Deckplatten durch Extrusion erweist sich im Hinblick auf die Rillenstruktur als besonders vorteilhaft, da eine teure mechanische Bearbeitung zur Herstellung der Rillenstruktur entfallen kann.

Die Fertigung möglichst vieler Elemente des Ladungsträgers durch Extrusion ermöglicht eine sehr wirtschaftliche Bauweise des Ladungsträgers. Hier und im Folgenden ist unter "Extrusion" ein Verfahren zu verstehen, das nicht auf Kunststoffe beschränkt ist, sondern insbesondere auch Metalle betreffen kann, wobei für Metalle auch die Bezeichnung "Strangpressen" geläufig ist.

Wenn hier und im Folgenden von Extrusion die Rede ist, können insbesondere folgende Materialien für die Fertigung der entsprechenden Elemente verwendet werden, die sich im Hinblick auf ihre mechanischen, physikalischen und chemischen Materialeigenschaften und/oder auf ihre Wirtschaftlichkeit als besonders günstig für den Ladungsträger erweisen: AluminiumLegierungen, wie sie für Extrusion (bzw. für Strangpressen) an sich bekannt sind, wie z.B. EN AW-6060, EN AW-1050, EN AW-6082 oder EN AW-5083.

Zur mechanisch stabilen und gleichzeitig konstruktiv einfachen - und damit kostengünstigen - Befestigung der Deckplatten ist es bei einer besonders bevorzugten Ausführungsform des erfindungsgemäßen Ladungsträgers vorgesehen, dass die Ladungsträgersegmente jeweils mindestens zwei Trägerlamellen aufweisen, an denen die mindestens eine Deckplatte befestigt, insbesondere festgeschraubt, ist, wobei die Trägerlamellen des jeweiligen Ladungsträgersegments in der zweiten Richtung verlaufen und parallel zueinander angeordnet sind, wobei jeweils zwei der Trägerlamellen des jeweiligen Ladungsträgersegments in erster Richtung gesehen hintereinander angeordnet sind, wobei vorzugsweise die Trägerlamellen durch Extrusion gefertigt sind.

Bei einer besonders bevorzugten Ausführungsform des erfindungsgemäßen Ladungsträgers ist vorgesehen, dass die Trägerlamellen aufeinander folgender Ladungsträgersegmente so geformt sind, dass sie im ersten Zustand des Ladungsträgers in erster Richtung abschnittweise überlappen.

Dies ermöglicht eine Abstützung der Trägerlamellen gegeneinander im überlappenden Bereich, wenn, etwa bei schwerem Stückgut, eine besonders hohe Belastung parallel zur dritten Richtung auf die Ladungsträgersegmente wirkt.

Außerdem wird verhindert, dass Schmutz zwischen den Ladungsträgersegmenten durch den Ladungsträger im ersten Zustand fallen kann und so ggf. eine unter dem Ladungsträger befindliche Fläche, die insbesondere als Gleitfläche ausgeführt sein kann, verschmutzen kann, was in weiterer Folge auch zu einer Behinderung der Bewegung es Ladungsträgers auf der (Gleit-)Fläche führen könnte.

Vorzugsweise greifen die abschnittsweise überlappenden Trägerlamellen lose ineinander, sodass ein Spalt zwischen den Trägerlamellen ausgebildet ist, um eine hinreichende Flexibilität des Ladungsträgers sicherzustellen. Bei besagter hoher Belastung kann es in diesem Fall zu einem gewissen abschnittsweise Nachgeben der involvierten Ladungsträgersegmente kommen, bis sich diese gegenseitig abstützen.

Um das Aufrollen bzw. Abrollen des Ladungsträgers in möglichst exakter bzw. definierter Weise zu ermöglichen, ist es bei einer bevorzugten Ausführungsform des erfindungsgemäßen Ladungsträgers vorgesehen, dass zur Führung des Ladungsträgers beim Aufrollen und Abrollen die Ladungsträgersegmente jeweils mehrere, vorzugsweise zwei, Führungsglieder aufweisen, die in zweiter Richtung gesehen hintereinander angeordnet sind, wobei vorzugsweise parallel zur zweiten Richtung gesehen die Führungsglieder das jeweilige Ladungsträgersegment nach außen zumindest abschnittsweise begrenzen.

Aus Festigkeitsgründen sind die Führungsglieder vorzugsweise aus Stahl gefertigt, beispielsweise durch Laserschneiden oder Fräsen.

Gemäß dem oben Gesagten ist auch in diesem Fall unter "parallel" auch "antiparallel" zu verstehen, d.h. die Führungsglieder können das jeweilige Ladungsträgersegment sowohl in als auch gegen die zweite Richtung gesehen zumindest abschnittsweise abschließen bzw. nach außen begrenzen. In zweiter Richtung gesehen sind die Führungslieder dann entsprechend in einem Anfangs- und Endbereich des jeweiligen Ladungsträgersegments angeordnet.

Die Führungsglieder der Ladungsträgersegmente können beim Aufrollen bzw. Abrollen mit entsprechenden Führungsmitteln zusammenwirken bzw. sind für dieses Zusammenwirken ausgelegt. Als Führungsmittel kommen beispielsweise an sich bekannte Gleitführungen in Frage, die z.B. durch entsprechend geformte Profile ausgebildet sein können, welche Profile wiederum aus geeigneten Materialien (umfassend reibungsarme Kunststoffe) aufgebaut oder mit solchen Materialien beschichtet sein können. Ein weiteres Beispiel für geeignete Führungsmittel wären an sich bekannte Rollenführungen, wobei Führungsrollen so angeordnet sind, dass der gewünschte spiralförmige Verlauf des Ladungsträgers erzielt wird.

Vorzugsweise sind die Führungsmittel in der Speichereinheit vorgesehen.

Bei einer besonders bevorzugten Ausführungsform des erfindungsgemäßen Ladungsträgers ist vorgesehen, dass die Führungsglieder entlang der ersten Richtung eine zumindest abschnittsweise gekrümmte Kontur aufweisen. Dies erweist sich im Hinblick auf eine besonders exakte Führung als besonders vorteilhaft, weil die gekrümmte Kontur eine "flächige" Führung auf mehreren Führungsrollen gleichzeitig oder großen Abschnitten von Führungsschienen, insbesondere in der Speichereinheit, erlaubt. Bei einer geradlinig verlaufenden Kontur würde sich hingegen nur der Kontakt mit einer Führungsrolle bzw. mit einer geringeren Kontaktfläche ergeben.

Um die problemlose Bewegung des Ladungsträgers zu ermöglichen, ist es bei einer bevorzugten Ausführungsform des erfindungsgemäßen Ladungsträgers vorgesehen, dass die Ladungsträgersegmente ein erstes Ladungsträgersegment und ein letztes Ladungsträgersegment umfassen, wobei in erster Richtung gesehen zwischen dem ersten Ladungsträgersegment und dem letzten Ladungsträgersegment die restlichen Ladungsträgersegmente angeordnet sind, wenn sich der Ladungsträger im ersten Zustand befindet, und dass im Bereich des ersten Ladungsträgersegments mindestens ein erstes Verbindungselement zur Verbindung des Ladungsträgers mit einer Zug- und Schubvorrichtung vorgesehen ist. Die Zug- und Schubvorrichtung dient zum Ziehen des Ladungsträgers (bzw. der Ladungsträgersegmente) in einer Zugrichtung, um diesen beim Entladen aus dem Container zu ziehen, sowie zum Drücken bzw. Schieben des Ladungsträgers (bzw. der Ladungsträgersegmente) in einer zur Zugrichtung entgegengesetzten Schubrichtung, um diesen beim Beladen in den Container zu schieben. Geeignete erste Verbindungselemente sind an sich bekannt und können z.B. unterschiedlichste Formen von Haken und Ösen umfassen.

Bei einer besonders bevorzugten Ausführungsform des erfindungsgemäßen Ladungsträgers ist vorgesehen, dass im Bereich des letzten Ladungsträgersegments mindestens ein in der dritten Richtung abragendes Wandelement vorgesehen ist. Das mindestens eine Wandelement stellt sicher, dass beim Entladen möglichst kein Ladungsgut gegen die Zugrichtung bzw. gegen die erste Richtung vom Ladungsträger rutschen kann, wodurch eine möglichst vollständige Entladung des Containers erreicht wird.

Insbesondere kann dabei das mindestens eine Wandelement so dimensioniert sein, dass die Querschnittsfläche des Innenraums des Containers bzw. des Laderaums des Transportfahrzeugs im Wesentlichen vollständig abgedeckt wird. Das mindestens eine Wandelement verhindert somit vollständig ein Herunterfallen des Stückguts während der Entladung, sodass keine Güter im Container bzw. Laderaum zurückbleiben.

Gemäß dem oben Gesagten ist erfindungsgemäß auch ein System umfassend einen erfindungsgemäßen Ladungsträger vorgesehen, das System weiters umfassend eine Zug- und Schubvorrichtung zum Ziehen des Ladungsträgers in einer Zugrichtung aus einem Container und zum Schieben des Ladungsträgers in einer entgegengesetzten Schubrichtung in einen Container, wobei die Zug- und Schubvorrichtung mindestens ein zweites Verbindungselement zur Verbindung mit dem Ladungsträger aufweist sowie eine Speichereinheit mit Führungsmitteln, insbesondere Führungsrollen, zum Aufrollen des Ladungsträgers, um diesen zumindest abschnittsweise im zweiten Zustand aufzubewahren. Selbstverständlich führen die Führungsmittel den Ladungsträger bzw. die Ladungsträgersegmente auch beim Abrollen, d.h. beim Überführen des Ladungsträgers vom zweiten in den ersten Zustand.

Das System kann z.B. an einer Be-/Entladebucht, wo Lastkraftwägen zur Be-/Entladung ihrer Container bzw.

Laderäume oder Ladeflächen andocken, fix installiert sein oder kann portabel sein, um problemlos an der Entladebucht angeordnet zu werden.

Geeignete zweite Verbindungselemente zur Verbindung mit dem Ladungsträger bzw. mit zumindest einem Ladungsträgersegment des Ladungsträgers sind an sich bekannt, z.B. Haken, Ösen oder Klemmen.

Das zweite Verbindungselement ist insbesondere zur Verbindung bzw. Kopplung mit dem ersten Verbindungselement des Ladungsträgers ausgelegt.

Als Führungsmittel der Speichereinheit kommen die weiter oben bereits beschriebenen Führungsmittel in Frage, also insbesondere Profile, in denen der Ladungsträger, genauer die Ladungsträgersegmente, gleitend geführt werden oder Anordnungen von Führungsrollen.

Die Führungsmittel können dabei insbesondere für das Zusammenwirken mit den Führungsgliedern der Ladungsträgersegmente ausgelegt sein.

Die Speichereinheit kann z.B. in Form einer Kassette bzw. Trommel ausgebildet sein.

Die Zug- und Schubvorrichtung kann insbesondere mindestens einen Elektromotor umfassen, um den Ladungsträger zu bewegen. Um eine konstruktiv einfache Wirkverbindung zwischen der Zug- und Schubvorrichtung einerseits und dem mindestens einen zweiten Verbindungselement bzw. dem Ladungsträger andererseits bereitzustellen, ist es bei einer bevorzugten Ausführungsform des erfindungsgemäßen Systems vorgesehen, dass das mindestens eine zweite Verbindungselement mit einem Verbindungsstück verbunden ist, welches Verbindungsstück durch die Zug- und Schubvorrichtung bewegbar ist und mehrere starre Verbindungsstücksegmente umfasst, die im Wesentlichen wie die Ladungsträgersegmente des Ladungsträgers gelenkig miteinander verbunden sind, um das Verbindungsstück gemeinsam mit zumindest einem Abschnitt des Ladungsträgers im zweiten Zustand in der Speichereinheit aufbewahren zu können. Indem das Verbindungsstück mit seinen gelenkig miteinander verbundenen Verbindungsstücksegmenten im Wesentlichen genauso wie der Ladungsträger mit seinen Ladungsträgersegmenten aufgebaut ist, kann eine kostengünstige Herstellung erreicht werden. Weiters kann aufgrund dieser Konstruktion das Verbindungsstück gewissermaßen als Verlängerung des Ladungsträgers über das erste Ladungsträgersegment hinaus fungieren und von der Zug- und Schubvorrichtung genauso bewegt werden, um gemeinsam mit dem Ladungsträger in der Speichereinheit aufgerollt oder aus der Speichereinheit abgerollt zu werden. Dabei wäre es denkbar, dass insbesondere eine Länge der Verbindungsstücksegmente sich von der Segmentlänge der Ladungsträgersegmente - geringfügig - unterscheidet und beispielsweise 10 cm statt 20 cm beträgt.

Denkbar wäre es z.B., dass in der Speichereinheit eine Art Welle der Zug- und Schubvorrichtung vorgesehen ist, die mittels mindestens eines Motors, insbesondere Elektromotors, in eine erste Drehrichtung sowie in eine entgegengesetzte zweite Drehrichtung antreibbar ist, und dass das Verbindungsstück mit einem ersten Endbereich an der Welle befestigt ist, wobei der erste Endbereich einem zweiten Endbereich gegenüberliegt und das zweite Verbindungselement im zweiten Endbereich befestigt ist. Bei Drehung der Welle in der ersten Drehrichtung werden entsprechend das Verbindungsstück und in weiterer Folge der mit dem Verbindungsstück verbundene Ladungsträger um die Welle herum spiralförmig aufgerollt bzw. aufgewickelt, wodurch der Ladungsträger mittels des Verbindungsstücks aus dem Container gezogen werden kann. Bei darauffolgender Drehung der Welle in der zweiten Drehrichtung werden der Ladungsträger und in weiterer Folge auch das Verbindungsstück entsprechend wieder von der Welle abgerollt bzw. abgewickelt, wodurch der Ladungsträger über das Verbindungsstück in den Container hinein geschoben bzw. gedrückt werden kann.

Insbesondere kann eine konstruktive Beschränkung des Schwenkwinkelbereichs der Verbindungsstücksegmente analog zur Beschränkung des Schwenkwinkelbereichs der Ladungsträgersegmente - in einer Richtung maximal 45°, bevorzugt maximal 30°, und in der entgegengesetzten Richtung maximal 3°, bevorzugt maximal 1°, besonders bevorzugt 0° - vorgesehen sein, um das Schieben bzw. Drücken beim Abrollen besonders effektiv und sicher zu gestalten.

Bei einer bevorzugten Ausführungsform des erfindungsgemäßen Systems ist vorgesehen, dass die Zug- und Schubvorrichtung einen Reibradantrieb zum Bewegen des Ladungsträgers umfasst, der in der Zugrichtung gesehen vor der Speichereinheit angeordnet ist. Dies stellt eine konstruktiv besonders einfache Lösung dar, da die Speichereinheit lediglich mit den Führungsmitteln ausgestattet werden muss und keine Antriebsmittel der Zug- und Schubvorrichtung in der Speichereinheit angeordnet werden müssen.

Der Reibradantrieb umfasst klarerweise mindestens ein Reibrad, welches dafür vorgesehen ist, mit einem Richtungsanteil parallel/antiparallel zur dritten Richtung gegen die Ladungsträgersegmente bzw. evtl. gegen die Verbindungsstücksegmente zu drücken und diese gegen eine Gegenfläche zu pressen, um hinreichend Reibung aufzubauen, sodass bei Drehung des Reibrads der Ladungsträger bzw. evtl. das Verbindungsstück bewegt wird. Durch Umkehrung der Drehrichtung des Reibrads kann der Ladungsträgers somit sowohl aus dem Container herausgezogen werden als auch in den Container hinein geschoben werden.

Um das entladene Ladegut, insbesondere Stückgut, nahtlos weiterfördern zu können, ist es bei einer bevorzugten Ausführungsform des erfindungsgemäßen Systems vorgesehen, dass ein weiterführender Förderer zur Förderung in einer Förderebene, die mit der ersten Richtung der Ladungsträgersegmente des im ersten Zustand befindlichen Ladungsträgers einen spitzen Winkel einschließt, vorgesehen ist, wobei ein dem weiterführenden Förderer vorgeschaltetes Übergangsstück vorgesehen ist, das dazu eingerichtet ist, mit einer Unterseite auf der Oberseite der Ladungsträgersegmente abzugleiten, wobei vorzugsweise die Unterseite des Übergangsstücks eine Rillenstruktur aufweist. Der weiterführende Förderer kann in an sich bekannter Weise ausgeführt sein, beispielsweise als Bandförderer.

Der spitze Winkel liegt typischerweise in einem Bereich von 6° bis 25°.

Im Hinblick auf das Übergangsstück wird grundsätzlich auf die Ausführungen weiter oben verwiesen. Wie bereits erwähnt, gewährleistet das Übergangsstück ein widerstandsarmes, stufenloses Gleiten des Ladeguts vom Ladungsträger auf den weiterführenden Förderer, wobei das Ladegut auf einer der Unterseite des Übergangsstücks gegenüberliegenden Oberseite des Übergangsstücks abgleitet.

Die Oberseite des vorgeschaltete Übergangsstück kann mit der ersten Richtung der Ladungsträgersegmente des im ersten Zustand befindlichen Ladungsträgers einen Winkel einschließen, der etwas flacher als der spitze Winkel ist, um den Übergang noch widerstandsärmer zu gestalten, z.B. einen Winkel von ca. 10° bei einem spitzen Winkel von ca. 22°.

Vorzugsweise greifen die Rillenstruktur des Übergangsstücks und Rillenstrukturen der Deckplatten ineinander, d.h. die Rillenstrukturen sind hierfür aufeinander abgestimmt. Hierdurch kann das Übergangsstück das auf der Deckplatte angeordnete Ladegut unterfahren, um für das Ladegut den Übergang vom Ladungsträger auf das Übergangsstück so stufenlos und widerstandsarm wie möglich zu machen.

Indem die Förderebene des weiterführenden Förderers zur Ladefläche des Ladungsträgers geneigt ist, kann das Ladegut bzw. Stückgut rasch auf ein höheres Niveau, das insbesondere höher als jenes der Entladebucht ist, gebracht werden, um den Weitertransport zu vereinfachen. Gleichzeitig kann durch diese Maßnahme am Niveau der Entladebucht Raum zur Unterbringung der Zug- und Schubvorrichtung und der Speichereinheit gewonnen werden.

Weiters kann bei einer besonders bevorzugten Ausführungsform des erfindungsgemäßen Ladungsträgers bzw. Systems vorgesehen sein, dass in erster Richtung gesehen nach dem mindestens einen Wandelement mindestens eine Abgleitplatte vorgesehen ist, die schräg vom Wandelement in Richtung Ladefläche verläuft, wobei die Abgleitplatte vom Übergangsstück zumindest abschnittsweise unterfahrbar ist. D.h. es besteht zumindest ein kleiner Spalt zwischen der Ladefläche (bzw. der Oberseite der Ladungsträgersegmente) und der Abgleitplatte. Dieser Spalt kann z.B. mit einer federbelasteten Klappe abgedeckt sein, die schwenkbar an der Abgleitplatte gelagert sein kann und zwischen der Ladefläche und der Abgleitplatte angeordnet ist. Die Klappe wird somit vom Übergangsstück weggedrückt, wenn sich die Abgleitplatte (in Zugrichtung) auf das Übergangsstück zu bewegt und diesem hinreichend nahe kommt. Das Übergangsstück wird dabei mit einem Anfangsbereich unter der Abgleitplatte angeordnet. Typischerweise verhindert ein Formschluss ein vollständiges Unterfahren der Abgleitplatte durch das Übergangsstück. Somit kann sämtliches Stückgut von der Abgleitplatte auf das Übergangsstück abgleiten und schließlich auf den weiterführenden Förderer bewegt werden.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines Systems umfassend einen erfindungsgemäßen Ladungsträger zum Beladen und Entladen eines Containers an einer Be-/Entladebucht
- Fig. 2: eine schematische axonometrische Ansicht des Ladungsträgers in einem ersten Zustand
- Fig. 3: eine schematische axonometrische Detailansicht von mehreren Ladungsträgersegmenten des Ladungsträgers gemäß Fig. 2
- Fig. 4: eine schematische axonometrische Detailansicht eines einzelnen Ladungsträgersegments
- Fig. 5: eine schematische Seitenansicht mehrerer Ladungsträgersegmente des Ladungsträgers in einem zweiten Zustand
- Fig. 6: eine schematische Seitenansicht analog zu Fig. 5, wobei Führungsglieder ausgeblendet sind
- Fig. 7: eine schematische Schnittansicht mehrerer Ladungsträgersegmente des Ladungsträgers im ersten Zustand
- Fig. 8: eine vergrößerte Schnittansicht des Systems aus Fig. 1
- Fig. 9: eine axonometrische Detailansicht eines Übergangsstücks des Systems aus Fig. 1

### WEGE ZUR AUSFÜHRUNG DER ERFINDUNG

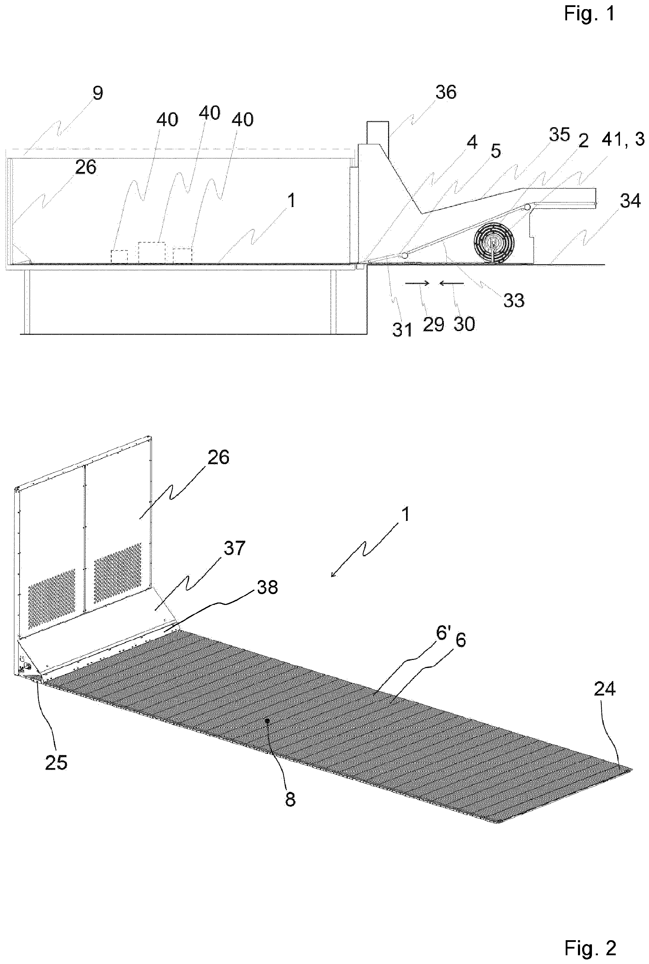

In der schematischen Schnittansicht der Fig. 1 ist ein Container 9 an einer Be-/Entladebucht 34 dargestellt, wobei ein erfindungsgemäßes System umfassend eine Ausführungsform eines erfindungsgemäßen Ladungsträgers 1 zum Beladen und Entladen des Containers 9 erkennbar ist. Der Ladungsträger 1 befindet sich in einem ersten Zustand und ist im Container 9 angeordnet und bedeckt dessen Boden, wobei Stückgut 40 (strichliert angedeutet) auf dem Ladungsträger 1 angeordnet ist.

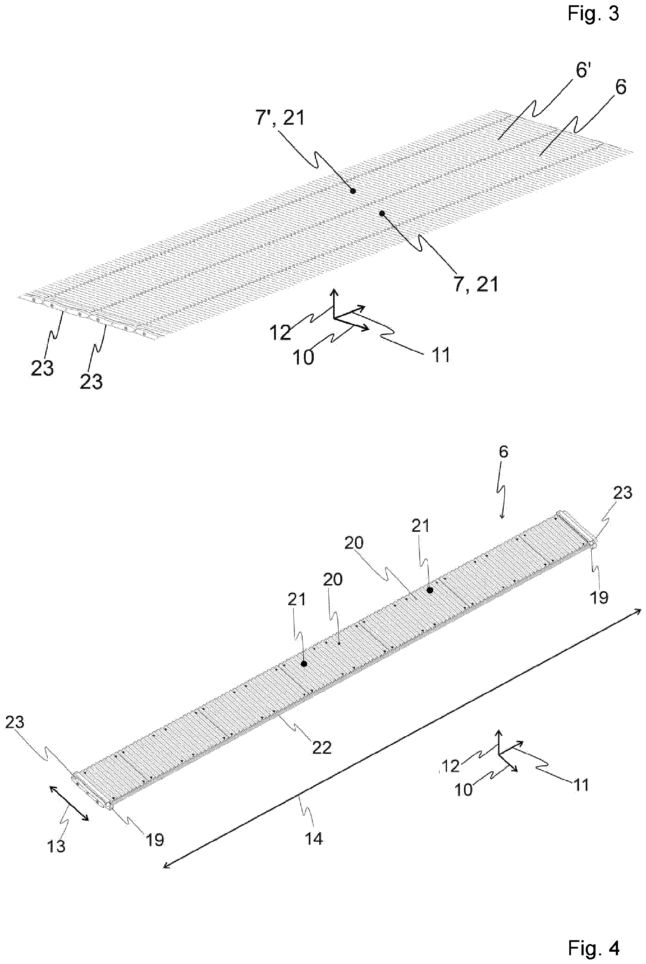

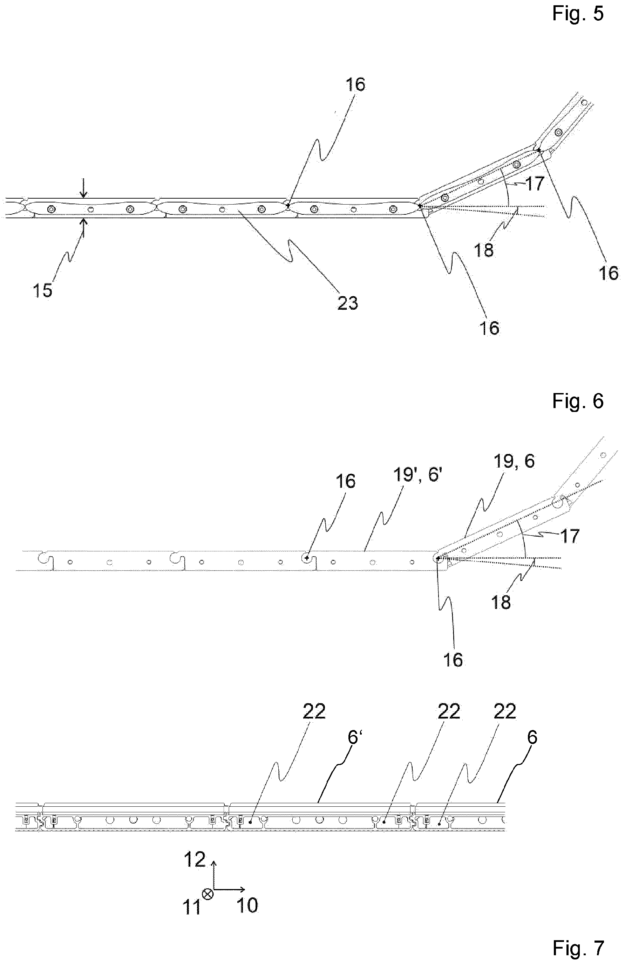

Der Ladungsträger 1, der in Fig. 2 in einer axonometrischen Ansicht dargestellt ist, umfasst starre Ladungsträgersegmente 6, 6', die in Fig. 3 und Fig. 4 nochmals detaillierter erkennbar sind. Die Ladungsträgersegmente 6, 6' weisen jeweils eine in eine dritte Richtung 12 weisende Oberseite 7, 7' auf, auf der das Stückgut 40, wie in Fig. 1 angedeutet, angeordnet werden kann. Die Ladungsträgersegmente 6, 6' erstrecken sich mit einer Segmentlänge 13 in einer ersten Richtung 10, mit einer Segmentbreite 14 in einer zweiten Richtung 11 und mit einer Segmenthöhe 15, vgl. Fig. 5, in der dritten Richtung 12. Die erste Richtung 10, die zweite Richtung 11 und die dritte Richtung 12 stehen dabei wechselseitig normal aufeinander. Typischerweise liegt die Segmentlänge 13 in einem Bereich von 0,1 m bis 1 m (z.B. 0,2 m), die Segmentbreite 14 in einem Bereich von 1 m bis 5 m und die Segmenthöhe 15 in einem Bereich von 0,015 m bis 0,1 m (z.B. 0,025 m).

Im ersten Zustand des Ladungsträgers 1 sind die Oberseiten 7, 7' der Ladungsträgersegmente 6, 6' im Wesentlichen parallel zueinander und in erster Richtung 10 gesehen hintereinander angeordnet, um eine im Wesentlichen ebene Ladefläche 8 auszubilden. Die Abmessungen des Ladungsträgers 1 können klarerweise auf die Abmessungen des Containers 9 abgestimmt sein, sodass die Ladefläche 8 im Wesentlichen den gesamten Boden des Containers 9 abdeckt und sämtliches Stückgut 40, das in den Container 9 gegeben wird, auf oder über der Ladefläche 8 angeordnet wird, wenn der Ladungsträger 1 in seinem ersten Zustand vollständig im Container 9 angeordnet ist.

Im ersten Zustand erstreckt sich der Ladungsträger 1 gegen die erste Richtung 10 gesehen von einem ersten Ladungsträgersegment 24 zu einem letzten Ladungsträgersegment 25, zwischen denen die restlichen Ladungsträgersegmente 6, 6' angeordnet sind.

Die Ladungsträgersegmente 6, 6' sind derart gelenkig miteinander verbunden, dass die Ladungsträgersegmente 6, 6' um parallel zur zweiten Richtung 11 verlaufende Schwenkachsen 16 gegeneinander verschwenkbar sind, vgl. Fig. 5. Dabei ist im ersten Zustand jeweils eines der Ladungsträgersegmente 6, das in der ersten Richtung 10 gesehen auf ein jeweils anderes der Ladungsträgersegmente 6' folgt, mit seiner Oberseite 7 in Richtung der Oberseite 7' des anderen Ladungsträgersegments 6' verschwenkbar, um den Ladungsträger 1 durch zumindest abschnittsweises spiralförmiges Aufrollen der Ladungsträgersegmente 6, 6' aus dem ersten Zustand in einen zweiten Zustand überführen zu können, wobei der Ladungsträger 1 aus dem zweiten Zustand durch Abrollen in den ersten Zustand überführbar ist.

Entsprechend lässt sich der Ladungsträger 1 im zweiten Zustand sehr platzsparend in einer Speicherkassette 2, die Teil des in Fig. 1 dargestellten Systems ist, speichern bzw. verwahren.

Beim bzw. durch das Aufrollen kann der Ladungsträger 1 aus dem Container 9 in einer Zugrichtung 29 herausgezogen werden, wodurch der Container 9 entladen wird bzw. das Stückgut 40 aus dem Container 9 gefördert wird.

Um sicherzustellen, dass beim Entladen möglichst kein Stückgut 40 gegen die Zugrichtung 29 vom Ladungsträger 1 rutschen kann und der Container 9 vollständig entleert wird, ist bei der dargestellten Ausführungsform ein Wandelement 26 vorgesehen, das vom letzten Ladungsträgersegment 25 senkrecht in der dritten Richtung 12 absteht. Das Wandelement 26 ist dabei so dimensioniert, dass die Querschnittsfläche des Innenraums des Containers 9 vollständig abgedeckt wird, sodass kein Stückgut 40 beim Entladen im Container 9 verbleibt.

Zur gelenkigen Verbindung weisen die Ladungsträgersegmente 6, 6' im dargestellten Ausführungsbeispiel jeweils zwei Schwenkglieder 19, 19' auf, wobei die Schwenkglieder 19, 19' von zwei aufeinander folgenden Ladungsträgersegmenten 6, 6' verschwenkbar ineinander greifen, vgl. Fig. 6. Die Schwenkglieder 19, 19' sind dabei so geformt, dass im ersten Zustand des Ladungsträgers 1 das jeweils eine der Ladungsträgersegmente 6 mit seiner Oberseite 7 in Richtung der Oberseite 7' des jeweils anderen Ladungsträgersegments 6' um einen ersten Schwenkwinkel 17 ("nach oben") verschwenkbar ist, der im dargestellten Ausführungsbeispiel maximal 30° beträgt, und dass im ersten Zustand des Ladungsträgers 1 das jeweils eine der Ladungsträgersegmente 6 mit seiner Oberseite 7 von der Oberseite 7' des jeweils anderen Ladungsträgersegments 6' weg um einen zweiten Schwenkwinkel 18 ("nach unten") verschwenkbar ist, der im dargestellten Ausführungsbeispiel maximal 3° beträgt. D.h. der Schwenkwinkelbereich ist bzw. die Schwenkwinkel 17, 18 sind durch Formschluss der Schwenkglieder 19, 19' beschränkt, wodurch sich der Ladungsträger 1 nicht nur in der Zugrichtung 29 problemlos ziehen lässt, sondern auch in einer entgegengesetzten Schubrichtung 30 problemlos schieben bzw. drücken lässt, um den Ladungsträger 1 samt darauf angeordnetem Stückgut 40 in den Container 9 hinein zu schieben und so den Container 9 zu beladen.

In zweiter Richtung 11 gesehen sind die Schwenkglieder 19 des Ladungsträgersegments 6 hintereinander und in einander gegenüberliegenden Endbereichen des Ladungsträgersegments 6 angeordnet.

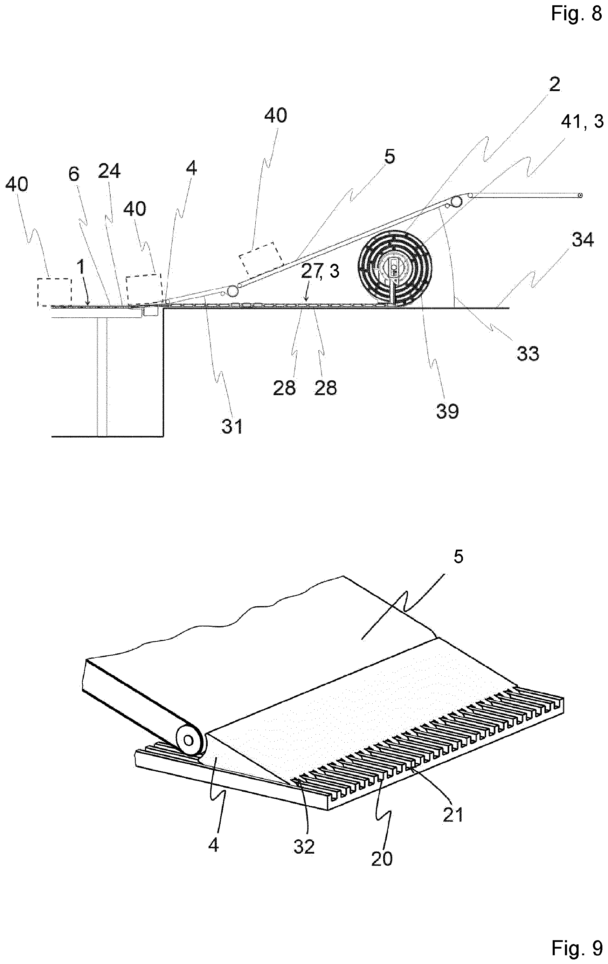

Im dargestellten Ausführungsbeispiel weisen die Ladungsträgersegmente 6, 6' jeweils mehrere Deckplatten 20 auf, die in zweiter Richtung 11 gesehen hintereinander angeordnet sind. Die Deckplatten 20 sind jeweils mit einer Rillenstruktur 21 versehen und bilden damit die Oberseiten 7, 7' aus. Die Rillenstruktur 21 erweist sich als günstig für den Halt des Stückguts 40 auf dem Ladungsträger 1. Darüberhinaus wird die Rillenstruktur 21 im dargestellten Ausführungsbeispiel für einen möglichst schonenden Übergang auf einen weiterführenden Förderer 5 des erfindungsgemäßen Systems ausgenutzt, indem ein Übergangsstück 4 des Systems zwischengeschaltet ist, das auf einer Unterseite 31 eine korrespondierende Rillenstruktur 32 aufweist, die in die Rillenstruktur 21 der Ladungsträgersegmente 6, 6' eingreift, vgl. Fig. 1 und Fig. 9. Hierdurch kann das Übergangsstück 4 das auf den Deckplatten 20 angeordnete Stückgut 40 unterfahren, um ein widerstandsarmes, stufenloses Gleiten des Stückguts 40 auf das Übergangsstück 4 (genauer auf eine der Unterseite 31 gegenüberliegenden Oberseite des Übergangsstücks 4) und in der Folge auf den weiterführenden Förderer 5 zu ermöglichen. Der weiterführende Förderer 5, der im dargestellten Ausführungsbeispiel als Bandförderer ausgebildet ist, ist zur Förderung in einer Förderebene vorgesehen, die mit der ersten Richtung 10 der Ladungsträgersegmente 6, 6' des im ersten Zustand befindlichen Ladungsträgers 1 bzw. mit der Zugrichtung 29 einen spitzen Winkel 33 (im dargestellten Ausführungsbeispiel ca. 22°) einschließt. Durch diese Neigung kann das Stückgut 40 rasch auf ein höheres Niveau, das höher als jenes der Be-/Entladebucht 34 ist, gebracht werden, um den Weitertransport zu vereinfachen.

Bei der dargestellten Ausführungsform des erfindungsgemäßen Ladungsträgers bzw. Systems ist in erster Richtung 10 gesehen nach dem Wandelement 26 eine Abgleitplatte 37 vorgesehen, die schräg vom Wandelement 26 in Richtung Ladefläche 8 verläuft. Die Abgleitplatte 37 endet jedoch nicht auf der Ladefläche 8 (bzw. der Oberseite 7 eines Ladungsträgersegments 6), sondern bereits etwas über dieser. D.h. es besteht ein kleiner Spalt zwischen der Ladefläche 8 und der Abgleitplatte 37, wodurch die Abgleitplatte 37 vom Übergangsstück 4 abschnittsweise unterfahrbar ist. Dieser Spalt ist im dargestellten Ausführungsbeispiel mit einer federbelasteten Klappe 38 abgedeckt, die schwenkbar an der Abgleitplatte 37 gelagert ist und zwischen der Ladefläche 8 und der Abgleitplatte 37 angeordnet ist. Die Klappe 38 wird somit vom Übergangsstück 4 weggedrückt, wenn sich die Abgleitplatte 37 in Zugrichtung 29 auf das Übergangsstück 4 zu bewegt und diesem hinreichend nahe kommt, sodass das Übergangsstück 4 die Klappe 38 berührt. Das Übergangsstück 4 wird dabei mit einem Anfangsbereich unter der Abgleitplatte 37 angeordnet, wobei ein Formschluss ein vollständiges Unterfahren der Abgleitplatte 37 durch das Übergangsstück 4 verhindert. Somit kann sämtliches Stückgut 40 auf das Übergangsstück 4 abgleiten und schließlich auf den weiterführenden Förderer 5 bewegt werden.

Im dargestellten Ausführungsbeispiel sind die Deckplatten 20 auf Trägerlamellen 22 durch Verschraubung befestigt, wobei die Deckplatten 20 in der dritten Richtung 12 gesehen hinter den Trägerlamellen 22 angeordnet sind. Jedes Ladungsträgersegment 6, 6' weist genau zwei Trägerlamellen 22 auf, die in der zweiten Richtung 11 verlaufen und parallel zueinander angeordnet sind. Die zwei Trägerlamellen 22 des jeweiligen Ladungsträgersegments 6, 6' sind dabei in erster Richtung 10 gesehen hintereinander angeordnet.

In Fig. 7 ist erkennbar, dass die Trägerlamellen 22 aufeinander folgender Ladungsträgersegmente 6, 6' so geformt sind, dass sie im ersten Zustand des Ladungsträgers 1 in erster Richtung 10 abschnittweise überlappen. Dies ermöglicht u.a. eine Abstützung der Trägerlamellen 22 gegeneinander im überlappenden Bereich, wenn, etwa bei schwerem Stückgut 40, eine besonders hohe Belastung parallel zur dritten Richtung 12 auf die Ladungsträgersegmente 6, 6' wirkt.

In Fig. 4 und Fig. 5 ist besonders deutlich erkennbar, dass im dargestellten Ausführungsbeispiel die Ladungsträgersegmente 6, 6' jeweils zwei Führungsglieder 23 aufweisen, die zur Führung des Ladungsträgers 1 beim Aufrollen und Abrollen dienen. In zweiter Richtung 11 gesehen sind die Führungsglieder 23 des jeweiligen Ladungsträgersegments 6, 6' hintereinander und in einander gegenüberliegenden Endbereichen des Ladungsträgersegments 6, 6' angeordnet, wobei sie das jeweilige Ladungsträgersegment 6, 6' nach außen begrenzen.

Die Führungsglieder 23 sind für das Zusammenwirken mit als Gleitführungen fungierenden, spiralförmig verlaufenden Führungsprofilen 39 in der Speicherkassette 2 vorgesehen, vgl. Fig. 8. Die Führungsglieder 23 weisen entlang der ersten Richtung 10 eine gekrümmte Kontur auf, vgl. Fig. 5. Letzteres erweist sich im Hinblick auf eine besonders exakte Führung als besonders vorteilhaft, weil die gekrümmte Kontur eine "flächige" Führung, gleichzeitig auf großen Abschnitten der Führungsprofile 39 (bzw. mit großen Kontaktflächen) erlaubt.

Im dargestellten Ausführungsbeispiel sind die Führungsglieder 23 ebenso wie die Schwenkglieder 19, 19' aus Stahl gefertigt (z.B. durch Laserschneiden oder Fräsen), wohingegen die Deckplatten 20 und die Trägerlamellen 22 aus einer AluminiumLegierung durch Extrusion gefertigt sind.

Im dargestellten Ausführungsbeispiel umfasst das System eine Zug- und Schubvorrichtung 3 zum Ziehen des Ladungsträgers 1 in der Zugrichtung 29 aus dem Container 9 und zum Schieben des Ladungsträgers 1 in der Schubrichtung 30 in den Container 9.

Zur Verbindung mit der Zug- und Schubvorrichtung 3 weist der Ladungsträger 1 im Bereich des ersten Ladungsträgersegments 24 mindestens ein erstes Verbindungselement, das beispielsweise Haken oder Ösen (nicht dargestellt) umfassen kann, auf. Die Zug- und Schubvorrichtung 3 weist entsprechend mindestens ein dazu passendes zweites Verbindungselement auf, das beispielsweise Ösen oder Haken (nicht dargestellt) umfassen kann, wobei die ersten und zweiten Verbindungselemente miteinander koppelbar sind. Im dargestellten Ausführungsbeispiel ist das mindestens eine zweite Verbindungselement mit einem Verbindungsstück 27 der Zug- und Schubvorrichtung 3 verbunden und an diesem angeordnet. Das Verbindungsstück 27 kann entsprechend durch die Zug- und Schubvorrichtung 3 bewegt werden und umfasst mehrere starre Verbindungsstücksegmente 28, die im Wesentlichen wie die Ladungsträgersegmente 6, 6' des Ladungsträgers 1 aufgebaut und gelenkig miteinander verbunden sind, um das Verbindungsstück 27 gemeinsam mit zumindest einem Abschnitt des Ladungsträgers 1 im zweiten Zustand in der Speichereinheit 2 aufbewahren zu können. Insbesondere weist das Verbindungsstück 27 im dargestellten Ausführungsbeispiel eine konstruktive Beschränkung des Schwenkwinkelbereichs der Verbindungsstücksegmente 28 analog zur Beschränkung des Schwenkwinkelbereichs der Ladungsträgersegmente 6, 6' auf, um das Schieben bzw. Drücken beim Abrollen besonders effektiv und sicher zu gestalten: 30° in der einen (Schwenk-)Richtung und 3° in der anderen (Schwenk-)Richtung.

Im dargestellten Ausführungsbeispiel umfasst die Zug- und Schubvorrichtung 3 eine zentral in der Speicherkassette 2 angeordnete Welle 41, die mittels eines Elektromotors (nicht dargestellt), in eine erste Drehrichtung sowie in eine entgegengesetzte zweite Drehrichtung antreibbar ist. Das Verbindungsstück 27 ist mit einem ersten Endbereich an der Welle 41 befestigt, wobei der erste Endbereich einem zweiten Endbereich gegenüberliegt und das zweite Verbindungselement im zweiten Endbereich befestigt ist, d.h. der zweite Endbereich schließt an das erste Ladungsträgersegment 24 an. Bei Drehung der Welle 41 in der ersten Drehrichtung (in Fig. 1 und Fig. 8 gegen den Uhrzeigersinn) werden entsprechend das Verbindungsstück 27 und in weiterer Folge der mit dem Verbindungsstück 27 verbundene Ladungsträger 1 um die Welle 41 herum gemäß den Führungsprofilen 39 spiralförmig aufgerollt bzw. aufgewickelt, wodurch der Ladungsträger 1 mittels des Verbindungsstücks 27 aus dem Container 9 gezogen werden kann. Bei darauffolgender Drehung der Welle 41 in der zweiten Drehrichtung (in Fig. 1 und Fig. 8 im Uhrzeigersinn) werden der Ladungsträger 1 und in weiterer Folge auch das Verbindungsstück 27 entsprechend wieder von der Welle 41 abgerollt bzw. abgewickelt, wodurch der Ladungsträger 1 über das Verbindungsstück 27 in den Container 9 hinein geschoben bzw. gedrückt werden kann.

Im dargestellten Ausführungsbeispiel ist die Speicherkassette 2 mit der Zug- und Schubvorrichtung 3 inkl. des Verbindungsstücks 27 sowie mit dem weiterführenden Förderer 5 und dem Übergangsstück 4 in einer portablen Be-/Entladeeinheit 35 zusammengefasst. Die Speicherkassette 2 ist dabei platzsparend unter dem weiterführenden Förderer 5 angeordnet. Ein Gehäuse der Be-/Entladeeinheit 35 schützt die einzelnen Komponenten gegen äußere Einflüsse. Die Be-/Entladeeinheit 35 kann je nach Bedarf zu einem Tor 36 der Be-/Entladebucht 34 geführt und an diesem angeordnet werden, um Container 9 an der Be-/Entladebucht 34 zu beladen bzw. zu entladen. Selbstverständlich wäre aber auch eine permanente Installation der Be-/Entladeeinheit 35 an der Be-/Entladebucht 34 denkbar.

### BEZUGSZEICHENLISTE

- 1: Ladungsträger
- 2: Speicherkassette
- 3: Zug- und Schubvorrichtung
- 4: Übergangsstück
- 5: Weiterführender Förderer
- 6, 6': Ladungsträgersegment
- 7, 7': Oberseite des Ladungsträgersegments
- 8: Ladefläche
- 9: Container
- 10: Erste Richtung
- 11: Zweite Richtung
- 12: Dritte Richtung
- 13: Segmentlänge
- 14: Segmentbreite
- 15: Segmenthöhe
- 16: Schwenkachse
- 17: Erster Schwenkwinkel
- 18: Zweiter Schwenkwinkel
- 19, 19': Schwenkglied
- 20: Deckplatte
- 21: Rillenstruktur der Deckplatte
- 22: Trägerlamelle
- 23: Führungsglied
- 24: Erstes Ladungsträgersegment
- 25: Letztes Ladungsträgersegment
- 26: Wandelement
- 27: Verbindungsstück
- 28: Verbindungsstücksegment
- 29: Zugrichtung
- 30: Schubrichtung
- 31: Unterseite des Übergangsstücks
- 32: Rillenstruktur des Übergangsstücks
- 33: Winkel
- 34: Be-/Entladebucht
- 35: Be-/Entladeeinheit
- 36: Tor
- 37: Abgleitplatte
- 38: Federbelastete Klappe
- 39: Führungsprofil
- 40: Stückgut
- 41: Welle

## Patentansprüche

1. Ladungsträger (1) zum Beladen und Entladen eines Containers (9), umfassend starre Ladungsträgersegmente (6, 6'),
wobei die Ladungsträgersegmente (6, 6') jeweils eine in eine dritte Richtung (12) weisende Oberseite (7, 7') aufweisen und sich mit einer Segmentlänge (13) in einer ersten Richtung (10) erstrecken und mit einer Segmentbreite (14) in einer zweiten Richtung (11), wobei die erste Richtung (10), die zweite Richtung (11) und die dritte Richtung (12) wechselseitig normal aufeinander stehen,
wobei in einem ersten Zustand des Ladungsträgers (1) die Oberseiten (7, 7') der Ladungsträgersegmente (6, 6') im Wesentlichen parallel zueinander und in erster Richtung (10) gesehen hintereinander angeordnet sind, um eine im Wesentlichen ebene Ladefläche (8) auszubilden,
wobei die Ladungsträgersegmente (6, 6') derart gelenkig miteinander verbunden sind, dass die Ladungsträgersegmente (6, 6') um parallel zur zweiten Richtung (11) verlaufende Schwenkachsen (16) gegeneinander verschwenkbar sind, wobei im ersten Zustand jeweils eines der Ladungsträgersegmente (6), das in der ersten Richtung (10) gesehen auf ein jeweils anderes der Ladungsträgersegmente (6') folgt, mit seiner Oberseite (7) in Richtung der Oberseite (7') des anderen Ladungsträgersegments (6') verschwenkbar ist, um den Ladungsträger (1) durch zumindest abschnittsweises spiralförmiges Aufrollen der Ladungsträgersegmente (6, 6') aus dem ersten Zustand in einen zweiten Zustand überführen zu können,
wobei der Ladungsträger (1) aus dem zweiten Zustand durch Abrollen in den ersten Zustand überführbar ist.

2. Ladungsträger (1) nach Anspruch 1, **dadurch gekennzeichnet, dass** im ersten Zustand des Ladungsträgers (1) das jeweils eine der Ladungsträgersegmente (6) mit seiner Oberseite (7) in Richtung der Oberseite (7') des jeweils anderen Ladungsträgersegments (6') um einen ersten Schwenkwinkel (17) verschwenkbar ist, der maximal 45°, bevorzugt maximal 30°, beträgt,
und dass im ersten Zustand des Ladungsträgers (1) das jeweils eine der Ladungsträgersegmente (6) mit seiner Oberseite (7) von der Oberseite (7') des jeweils anderen Ladungsträgersegments (6') weg um einen zweiten Schwenkwinkel (18) verschwenkbar ist, der maximal 3°, bevorzugt maximal 1°, besonders bevorzugt 0°, beträgt.

3. Ladungsträger (1) nach einem der Ansprüche 1 bis 2, **dadurch gekennzeichnet, dass** zur gelenkigen Verbindung der Ladungsträgersegmente (6, 6') die Ladungsträgersegmente (6, 6') jeweils mehrere, vorzugsweise zwei, Schwenkglieder (19, 19') aufweisen, wobei die Schwenkglieder (19, 19') von zwei aufeinander folgenden Ladungsträgersegmenten (6, 6') verschwenkbar ineinander greifen.

4. Ladungsträger (1) nach Anspruch 3 und nach Anspruch 2, **dadurch gekennzeichnet, dass** die Größe des ersten Schwenkwinkels (17) und die Größe des zweiten Schwenkwinkels (18) durch Formschluss der ineinander greifenden Schwenkglieder (19, 19') aufeinander folgender Ladungsträgersegmente (6, 6') beschränkt sind.

5. Ladungsträger (1) nach einem der Ansprüche 1 bis 4, **dadurch gekennzeichnet, dass** die Ladungsträgersegmente (6, 6') jeweils mindestens eine Deckplatte (20) aufweisen, wobei die Deckplatten (20) Rillenstrukturen (21) aufweisen, die die Oberseiten (7, 7') der Ladungsträgersegmente (6, 6') ausbilden, wobei vorzugsweise die Deckplatten (20) durch Extrusion gefertigt sind.

6. Ladungsträger (1) nach Anspruch 5, **dadurch gekennzeichnet, dass** die Ladungsträgersegmente (6, 6') jeweils mindestens zwei Trägerlamellen (22) aufweisen, an denen die mindestens eine Deckplatte (20) befestigt, insbesondere festgeschraubt, ist, wobei die Trägerlamellen (22) des jeweiligen Ladungsträgersegments (6, 6') in der zweiten Richtung (11) verlaufen und parallel zueinander angeordnet sind, wobei jeweils zwei der Trägerlamellen (22) des jeweiligen Ladungsträgersegments (6, 6') in erster Richtung (10) gesehen hintereinander angeordnet sind, wobei vorzugsweise die Trägerlamellen (22) durch Extrusion gefertigt sind.

7. Ladungsträger (1) nach Anspruch 6, **dadurch gekennzeichnet, dass** die Trägerlamellen (22) aufeinander folgender Ladungsträgersegmente (6, 6') so geformt sind, dass sie im ersten Zustand des Ladungsträgers (1) in erster Richtung (10) abschnittweise überlappen.

8. Ladungsträger (1) nach einem der Ansprüche 1 bis 7, **dadurch gekennzeichnet, dass** zur Führung des Ladungsträgers (1) beim Aufrollen und Abrollen die Ladungsträgersegmente (6, 6') jeweils mehrere, vorzugsweise zwei, Führungsglieder (23) aufweisen, die in zweiter Richtung (11) gesehen hintereinander angeordnet sind,
wobei vorzugsweise parallel zur zweiten Richtung (11) gesehen die Führungsglieder (23) das jeweilige Ladungsträgersegment (6, 6') nach außen zumindest abschnittsweise begrenzen.

9. Ladungsträger (1) nach Anspruch 8, **dadurch gekennzeichnet, dass** die Führungsglieder (23) entlang der ersten Richtung (10) eine zumindest abschnittsweise gekrümmte Kontur aufweisen.

10. Ladungsträger (1) nach einem der Ansprüche 1 bis 9, **dadurch gekennzeichnet, dass** die Ladungsträgersegmente (6, 6') ein erstes Ladungsträgersegment (24) und ein letztes Ladungsträgersegment (25) umfassen, wobei in erster Richtung (10) gesehen zwischen dem ersten Ladungsträgersegment (24) und dem letzten Ladungsträgersegment (25) die restlichen Ladungsträgersegmente (6, 6') angeordnet sind, wenn sich der Ladungsträger (1) im ersten Zustand befindet, und dass im Bereich des ersten Ladungsträgersegments (24) mindestens ein erstes Verbindungselement zur Verbindung des Ladungsträgers (1) mit einer Zug- und Schubvorrichtung (3) vorgesehen ist.

11. Ladungsträger (1) nach Anspruch 10, **dadurch gekennzeichnet, dass** im Bereich des letzten Ladungsträgersegments (25) mindestens ein in der dritten Richtung (12) abragendes Wandelement (26) vorgesehen ist.

12. System umfassend einen Ladungsträger (1) nach einem der Ansprüche 1 bis 11 sowie eine Zug- und Schubvorrichtung (3) zum Ziehen des Ladungsträgers (1) in einer Zugrichtung (29) aus einem Container (9) und zum Schieben des Ladungsträgers (1) in einer entgegengesetzten Schubrichtung (30) in einen Container (9), wobei die Zug- und Schubvorrichtung (3) mindestens ein zweites Verbindungselement zur Verbindung mit dem Ladungsträger (1) aufweist sowie eine Speichereinheit (2) mit Führungsmitteln (39), insbesondere Führungsrollen, zum Aufrollen des Ladungsträgers, um diesen zumindest abschnittsweise im zweiten Zustand aufzubewahren.

13. System nach Anspruch 12, **dadurch gekennzeichnet, dass** das mindestens eine zweite Verbindungselement mit einem Verbindungsstück (27) verbunden ist, welches Verbindungsstück (27) durch die Zug- und Schubvorrichtung (3) bewegbar ist und mehrere starre Verbindungsstücksegmente (28) umfasst, die im Wesentlichen wie die Ladungsträgersegmente (6, 6') des Ladungsträgers (1) gelenkig miteinander verbunden sind, um das Verbindungsstück (27) gemeinsam mit zumindest einem Abschnitt des Ladungsträgers (1) im zweiten Zustand in der Speichereinheit (2) aufbewahren zu können.

14. System nach einem der Ansprüche 12 bis 13, **dadurch gekennzeichnet, dass** die Zug- und Schubvorrichtung (3) einen Reibradantrieb zum Bewegen des Ladungsträgers (1) umfasst, der in der Zugrichtung (29) gesehen vor der Speichereinheit (2) angeordnet ist.

15. System nach einem der Ansprüche 12 bis 14, **dadurch gekennzeichnet, dass** ein weiterführender Förderer (5) zur Förderung in einer Förderebene, die mit der ersten Richtung (10) der Ladungsträgersegmente (6, 6') des im ersten Zustand befindlichen Ladungsträgers (1) einen spitzen Winkel (33) einschließt, vorgesehen ist,
wobei ein dem weiterführenden Förderer (5) vorgeschaltetes Übergangsstück (4) vorgesehen ist, das dazu eingerichtet ist, mit einer Unterseite (31) auf der Oberseite (7, 7') der Ladungsträgersegmente (6, 6') abzugleiten,
wobei vorzugsweise die Unterseite (31) des Übergangsstücks (4) eine Rillenstruktur (32) aufweist.
